# DEMANDE DE BREVET EUROPEEN

(11) **EP 0 715 367 A1**
(43) Date de publication de la demande: **05.06.1996**
(21) Numéro de dépôt: 95402720.7
(22) Date de dépôt: 01.12.1995
(51) Int. Cl.: H01M 10/10, H01M 2/16

(54) **Combinaison d'un separateur et d'un electrolyte pour accumulateur au plomb a recombinaison de gaz, et accumulateur utilisant une telle combinaison**

(30) Priorité: 01.12.1994 FR 9414453
(71) Demandeur: COMPAGNIE EUROPEENNE D'ACCUMULATEURS, Société anonyme dite:, F-92110 Clichy (FR)
(72) Inventeur: Henn, Francois, F-75017 Paris (FR)
(74) Mandataire: Leszczynski, André

(57) **Abrégé**

L'invention est relative à une combinaison d'un séparateur et d'un électrolyte pour accumulateur au plomb à recombinaison de gaz.

Elle associe un matériau poreux non tissé de fibres polymères et un électrolyte épaissi imprégné dans ledit matériau non tissé.

## Description

La présente invention concerne une combinaison d'un séparateur et d'un électrolyte pour accumulateur au plomb à recombinaison de gaz et un accumulateur utilisant une telle combinaison.

Les accumulateurs au plomb comprennent au moins deux électrodes contenant du plomb, à savoir une anode et une cathode, et un électrolyte à base d'acide sulfurique dans lequel sont immergées lesdites électrodes.

Un tel ensemble est apte à emmagasiner de l'énergie électrique et à la restituer en étant le siège d'une succession de réactions d'oxydo-réduction.

Lors de la charge, l'électrolyte se modifie et les électrodes se chargent électriquement, tandis que lors de la décharge, il se produit des réactions inverses de celles qui ont permis de charger les électrodes.

L'accumulateur peut être chargé puis déchargé un certain nombre de fois avant que sa capacité à emmagasiner et à restituer de l'énergie ne diminue de façon irréversible.

Une des raisons de cette dégradation est la stratification de l'électrolyte qui a tendance à se densifier en partie inférieure de l'accumulateur.

Il en résulte une dégradation de la capacité de l'accumulateur, laquelle est définie comme étant la quantité d'énergie susceptible d'être restituée par l'accumulateur.

En d'autres termes, si, lors des premiers cycles de charge et décharge, la capacité de l'accumulateur est égale à une valeur arbitraire de 100, elle peut diminuer progressivement et atteindre la valeur de 80 après un temps donné. Or, cette valeur de 80% est souvent prise comme limite inférieure en dessous de laquelle l'accumulateur est considéré hors service.

On a déjà proposé des remèdes pour tenter de stabiliser la composition de l'électrolyte, notamment en ajoutant une poudre de silice pyrogénée à l'électrolyte pour le gélifier, mais ces solutions conduisent à une perte sensible de la puissance de l'accumulateur, du fait que la circulation des espèces ioniques s'effectue alors plus lentement dans l'electrolyte, ce qui est préjudiciable lorsqu'on sollicite l'accumulateur en décharge rapide.

En outre, la première charge des électrodes, appelée formation, au cours de laquelle la matière active des électrodes se forme, ne peut pas être correctement effectuée dans un électrolyte ainsi stabilisé, en raison de la difficulté rencontrée par les ions pour circuler dans cet électrolyte.

La présente invention vise à résoudre ces inconvénients en proposant une combinaison d'un séparateur et d'un électrolyte qui confère une longue durée de vie à l'accumulateur sans dégrader la puissance de ce dernier en décharge rapide, notamment en évitant la stratification de l'électrolyte.

La présente invention a pour objet une combinaison d'un séparateur et d'un électrolyte pour un accumulateur au plomb à recombinaison de gaz, caractérisée par le fait qu'elle associe un matériau poreux non tissé de fibres polymères et un électrolyte épaissi imprégné dans ledit matériau non tissé.

Selon l'invention, on entend par électrolyte épaissi un électrolyte qui présente une faible fluidité, généralement, inférieure à 40 poise ⁻¹ à 20°C, sans pour cela se trouver à l'état de gel.

En d'autres termes, un électrolyte épaissi selon l'invention présente une viscosité supérieure à celle d'un électrolyte de même concentration d'acide et ne comportant pas d'agent épaississant, un tel électrolyte sans agent épaississant ayant une fluidité d'environ 40 poise ⁻¹ à 20°C.

Selon l'invention, la porosité du matériau non tissé de fibres polymères est de préférence supérieure à 75 %, de manière à ce que la quantité d'électrolyte de l'accumulateur, qui est principalement celle absorbée par le matériau, soit suffisante pour permettre le bon fonctionnement de l'accumulateur.

Avantageusement, la porosité du matériau non tissé est comprise entre 90 et 95 %.

Conformément à l'invention, les fibres polymères sont choisies parmi des polymères compatibles avec le fonctionnement de l'accumulateur et peuvent être réalisées en polyoléfine, en polyester ou en un composé de ces derniers.

Le diamètre des fibres polymères est de préférence compris entre 5 et 20 microns.

L'utilisation de telles fibres, dites grossières en raison de leur diamètre relativement élevé, est possible selon l'invention du fait que l'électrolyte qui est imprégné dans le matériau poreux non tissé est suffisamment visqueux pour s'y stabiliser par capillarité.

Réciproquement, ce phénomène de capillarité permet de recourir à un électrolyte qui est suffisamment visqueux pour ne pas gêner la circulation des ions et permettre la formation des électrodes, comme il sera expliqué ultérieurement.

Dans un mode de réalisation particulier de l'invention, le matériau poreux non tissé renferme une poudre minérale dont la granulométrie, comprise entre 1 et 50 µm, est appropriée pour que ses grains obturent les pores de gros diamètre du matériau non tissé.

De préférence, les poudres minérales sont des poudres fines d'oxydes insolubles et inertes vis-à-vis des réactions qui se produisent dans l'accumulateur, telles que des oxydes de terres rares ou des oxydes de zirconium.

Dans un mode de réalisation particulier de l'invention, les fibres polymères du matériau poreux non tissé sont mélangées à des fibres de verre de diamètre inférieur à environ 3 microns.

Ces fibres de verre ont pour fonction de réduire le diamètre moyen des pores du matériau poreux non tissé de manière à accroître d'avantage la stabilité de l'electrolyte épaissi qui se fixe entre les fibres par capillarité.

La quantité de fibres de verre par rapport à la quantité totale de fibres constituant le matériau poreux non tissé est de préférence comprise entre environ 0 et environ 95%.

Dans un mode de réalisation préféré de l'invention, l'électrolyte est constitué par mélange d'une solution à base d'acide sulfurique et d'une solution colloïdale de silice.

Ce mode de réalisation est particulièrement intéressant du point de vue industriel car il permet de fabriquer facilement l'électrolyte par mélange de deux liquides, ce qui est plus aisé que d'incorporer une poudre dans un liquide comme le prévoit le procédé antérieur connu qui consiste à ajouter une poudre de silice pyrogénée dans l'électrolyte pour le gélifier, lequel procédé antérieur présente par ailleurs d'autres inconvénients comme expliqué précédemment.

La quantité en poids de silice par rapport à l'électrolyte est avantageusement comprise en 0,5 et 6%.

Pour de faibles quantités en poids de silice comme ci-dessus, on obtient un électrolyte simplement visqueux, mais non gélifié.

Dans une variante préférée, on utilise comme solution colloïdale de silice, une solution aqueuse comprenant des particules de silice dont la granulométrie est comprise entre 7 et 50 nanomètres, lesdites particules étant stabilisées grâce à un faible taux d'hydroxyde de sodium, présent dans la solution colloïdale de silice dans une proportion de 30% en poids par exemple.

La combinaison selon l'invention présente de nombreux avantages.

Tout d'abord, du fait que l'électrolyte peut être totalement absorbé par le matériau poreux non tissé, on peut, selon l'invention, réaliser des accumulateurs dans lesquels les risques d'écoulement de l'électrolyte à l'extérieur des accumulateurs sont totalement éliminés.

Par ailleurs, l'invention permet d'obtenir une bonne décharge rapide de l'accumulateur ainsi qu'un bon taux de recombinaison, du fait que les ions peuvent circuler facilement entre les plaques, grâce à la porosité du matériau poreux non tissé de fibres et à la viscosité de l'électrolyte.

En outre, en dosant convenablement la composition de l'électrolyte, on peut contrôler sa vitesse d'épaississement, ce qui permet d'effectuer la formation des plaques d'électrodes dans l'electrolyte alors que ce dernier n'est pas encore complètement épaissi.

En d'autres termes, grâce à l'invention, on peut constituer un accumulateur en utilisant des plaques qui n'ont pas été préalablement formées, la formation des plaques étant réalisable à l'intérieur de l'accumulateur, alors que l'électrolyte est encore suffisamment fluide pour permettre les échanges d'ions et la formation de la matière active des plaques.

Dans un tel cas, pendant la formation des plaques, l'accumulateur est maintenu dans une position stable et immobile.

L'électrolyte s'épaissit alors progressivement en adoptant une configuration adaptée à la circulation des ions pour les cycles ultérieurs de charge et décharge de la batterie.

Une fois l'électrolyte épaissi et absorbé dans le séparateur, l'accumulateur peut être utilisé dans n'importe quelle orientation et subir des déplacements ou des vibrations sans que la stabilité de l'éléctrolyte ne s'en trouve altérée.

Un autre avantage résultant de la possibilité de contrôler la vitesse d'épaississement de l'électrolyte réside dans le fait que l'imprégnation du matériau poreux non tissé par l'électrolyte est grandement facilitée si l'on procède à cette imprégnation alors que l'électrolyte est encore fluide.

La présente invention présente également l'avantage que le matériau non tissé possède une bonne tenue mécanique qui facilite sa manipulation à l'échelle industrielle.

De plus, la présence de fibres de polymère dans le matériau poreux non tissé confère une élasticité à la combinaison selon l'invention, élasticité qui permet au séparateur de jouer pleinement son rôle qui est à la fois d'empêcher les courts-circuits entre deux électrodes voisines, et de maintenir fermement la matière active contre les plaques d'électrodes, cette matière active ayant à la longue tendance à se détacher des électrodes.

En outre, du fait que les fibres polymères peuvent être thermosoudées entre elles, on peut réaliser une poche autour d'une électrode, en enveloppant cette dernière avec une couche de matériau poreux non tissé de fibres et en scellant les bords ainsi réunis de la couche pour fermer la pochette et emprisonner l'électrode.

Cette possibilité se révèle particulièrement intéressante pour des batteries de démarrage ou, d'une manière plus générale, pour des batteries dans lesquelles les séparations entre électrodes sont faibles.

La présente invention a également pour objet un accumulateur au plomb à recombinaison de gaz, caractérisé par le fait qu'il utilise une combinaison d'un séparateur et d'un électrolyte telle que définie ci-dessus.

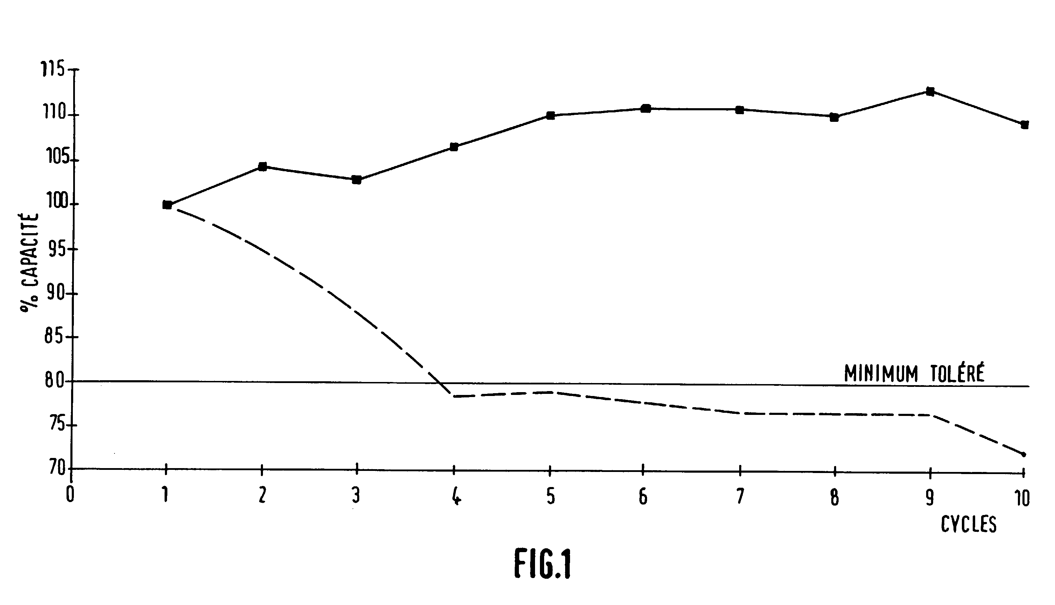

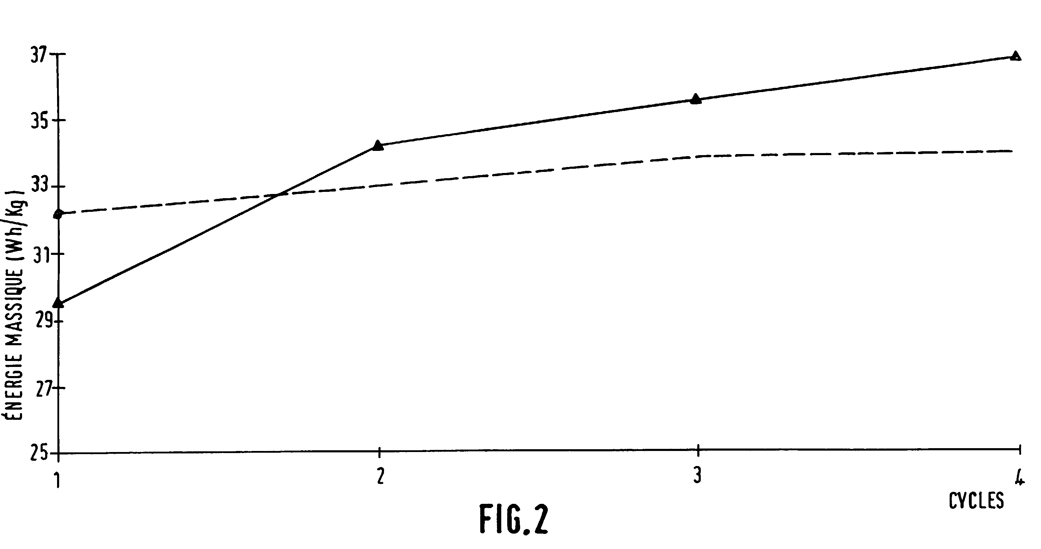

Dans le but de mieux faire comprendre l'invention on va en décrire maintenant différents exemples donnés à titre non limitatif en référence au dessin annexé, dans lequel les figures 1 et 2 sont des courbes de mesures effectuées sur un dispositif selon l'invention et sur un dispositif conventionnel.

### Exemple 1

On réalise un accumulateur comportant deux électrodes négatives et une électrode positive de 35 cm² préalablement formées, c'est-à-dire chargées électriquement.

On prépare un électrolyte de composition suivante :
- 105 g d'acide sulfurique concentré à 95-97%
- 145 g d'eau pure
- 17,6 g de solution colloïdale de silice à 30% de SiO2
et dont la taille des particules de SiO2 est de 9 nm. L'électrolyte contient donc 37,5% en poids d'acide sulfurique et 2% en poids de SiO2.

Un matériau poreux non tissé de fibres polymères bi-composant en polyoléfine-polyester est réalisé en une couche de 0,2 cm d'épaisseur. Les fibres polymères présentent un diamètre compris entre 5 et 8 µm.

Le matériau présente un réseau poreux ouvert qui occupe 90% du volume du matériau et dont les pores ont un diamètre compris entre 4 et 45 µm.

Les électrodes sont placées dans une cuve en étant séparées deux à deux par une couche du matériau non tissé décrit ci-dessus.

L'électrolyte est versé dans la cuve et pénètre dans chaque couche du matériau poreux non tissé par capillarité.

L'accumulateur ainsi constitué est soumis à une succession de cycles de charge et décharge.

A chaque cycle, la capacité relative de l'accumulateur est mesurée.

On entend par capacité relative, la capacité mesurée à un instant donné par rapport à la capacité initiale de l'accumulateur.

Le résultat de ces mesures est porté sur la figure 1 où il apparaît clairement que l'accumulateur selon l'invention présente une longévité importante en termes de nombre de cycles.

Sur cette figure 1, on a reporté en trait interrompu la variation de capacité relative d'un accumulateur conventionnel comportant des électrodes identiques à celles décrites ci-dessus, baignant dans un électrolyte liquide constitué uniquement d'eau et d'acide sulfurique dans les mêmes proportions que précédemment et dépourvu de séparateurs en matériau non tissé.

On voit que dès le 4ème cycle l'accumulateur conventionnel ne donne plus satisfaction car sa capacité relative passe en dessous du seuil toléré de 80%.

Au cours de cette succession de cycles, on mesure également le rendement de la matière positive de chaque accumulateur pour une décharge de 15 mn, c'est-à-dire la quantité d'ampères heure qu'elle est susceptible de fournir, ramenée à un poids unitaire de 1 kg de cette matière positive.

Cette mesure est effectuée en début et en fin de test.

L'accumulateur selon l'invention, présente, en début de test, un rendement de matière de 53 Ah/kg. Cette valeur augmente jusqu'à 56 Ah/kg en fin de test.

En revanche, l'accumulateur conventionnel présente, en début de test, un rendement de matière supérieur, à savoir, 60 Ah/kg ce qui s'explique par le fait que la circulation des espèces ioniques dans l'électrolyte non stabilisé est facilitée, mais cette valeur chute à 55 Ah/kg en fin de test, du fait que l'électrolyte se stratifie et que l'accumulateur se dégrade et ne fonctionne plus de façon homogène.

### Exemple 2

On réalise une batterie d'accumulateurs, formée de 6 accumulateurs montés en série, chaque accumulateur comportant 13 électrodes en plaques, les électrodes positives étant chacune enveloppées dans une pochette constituée par une couche d'un matériau non tissé selon l'invention présentant la composition suivante :
- 40% de fibres polyester de diamètre inférieur à 15 µm
- 55% de fibres de verre de diamètre inférieur à 3 µm, et
- 5% de poudre de silice dont les grains occupent les pores de plus grand diamètre du matériau non tissé de fibres.

La couche de matériau non tissé présente une épaisseur de 1,4 mm.

Les pochettes sont soudées sur leurs bords pour enfermer complètement chaque plaque, aucune plaque n'étant préalablement formée.

Un électrolyte, constitué par une solution colloïdale de silice pour 3% en poids et une solution d'acide sulfurique de concentration 33% est versé dans chaque cuve d'accumulateurs et s'imprègne dans les pochettes entourant les plaques.

La batterie d'accumulateurs est d'abord soumise à un cycle de formation puis à plusieurs cycles successifs de décharge/charge.

Au cours de ces cycles, on mesure l'énergie massique disponible aux bornes de la batterie.

Les mesures relevées sont reportées sur la figure 2 qui correspond à des décharges dont le courant est fixé de manière à ce que la décharge dure environ 20 heures.

Les mêmes mesures, effectuées sur une batterie d'accumulateur conventionnelle présentant le même nombre d'accumulateurs, chacun étant muni de 13 électrodes, sont reportées en trait interrompu sur la figure 2.

Les électrodes de cette batterie conventionnelle sont préalablement formées, faute de quoi il ne serait pas possible de la soumettre à la succession de cycles.

On voit sur la figure 2 que, dès le deuxième cycle, la batterie selon l'invention donne de meilleurs résultats que la batterie conventionnelle.

Il est bien entendu que les exemples qui viennent d'être décrits ne limitent en rien la portée de l'invention et qu'il pourra y être apporté toutes modifications désirables sans sortir pour cela du cadre de l'invention.

## Revendications

1. Combinaison d'un séparateur et d'un électrolyte pour un accumulateur au plomb à recombinaison de gaz, caractérisée par le fait qu'elle associe un matériau poreux non tissé de fibres polymères et un électrolyte épaissi imprégné dans ledit matériau non tissé.

2. Combinaison selon la revendication 1, caractérisée par le fait que les fibres polymères sont compatibles avec le fonctionnement de l'accumulateur et sont réalisées en polyoléfine, en polyester ou en un composé de ces derniers.

3. Combinaison selon la revendication 1, caractérisé par le fait que le diamètre des fibres polymères est compris entre 5 et 20 microns.

4. Combinaison selon la revendication 1, caractérisée par le fait que le matériau non tissé renferme une poudre minérale de granulométrie comprise entre 1 et 50 µm.

5. Combinaison selon la revendication 1, caractérisée par le fait que le matériau non tissé comporte des fibres de verre de diamètre inférieur à environ 1 micron.

6. Combinaison selon la revendication 5, caractérisée par le fait que la quantité de fibres de verre par rapport à la quantité totale de fibres constituant le matériau non tissé est comprise entre environ 0 et environ 95 %.

7. Combinaison selon la revendication 1, caractérisée par le fait que l'électrolyte est constitué par un mélange d'une solution à base d'acide sulfurique et d'une solution colloïdale de silice.

8. Combinaison selon la revendication 7, caractérisée par le fait que la quantité en poids de silice colloïdale par rapport à l'électrolyte est comprise entre 0,5 et 6%.

9. Combinaison selon la revendication 7, caractérisée par le fait que l'on utilise comme solution colloïdale de silice une solution aqueuse comprenant des particules de silice dont la granulométrie est comprise entre 7 et 50 nanomètres.

10. Accumulateur au plomb à recombinaison de gaz, caractérisé par le fait qu'il utilise une combinaison d'un séparateur et d'un électrolyte selon l'une quelconque des revendications 1 à 9.
